# EUROPÄISCHE PATENTANMELDUNG

(11) **EP 2 642 767 A2**
(43) Veröffentlichungstag der Anmeldung: **25.09.2013**
(21) Anmeldenummer: 13156408.0
(22) Anmeldetag: 22.02.2013
(51) Int. Cl.: H04R 1/02

(54) **Flugschiene zum Aufhängen von Gehäusen**

(30) Priorität: 19.03.2012 DE 102012102288
(71) Anmelder: ProAudio Technology GmbH, 78048 Villingen-Schwenningen (DE)
(72) Erfinder: Müller, Thomas, 78126 Königsfeld (DE)
(74) Vertreter: Kohlmann, Kai

(57) **Zusammenfassung**

Die Erfindung betrifft eine Flugschiene (1) mit einer Oberseite (2) und einer Unterseite (3) zum Aufhängen von Gehäusen der Veranstaltungstechnik umfassend eine von der Oberseite zugängliche Aufnahme (4) für ein verrastbares Anschlagmittel sowie mindestens zwei die Flugschiene durchsetzende Öffnungen (7a,7b).

Um eine Flugschiene (1) zu schaffen, mit der ein Aufhängen des Gehäuses auch ohne spezielle Anschlagmittel für Flugschienen möglich ist, wird vorgeschlagen dass an der Unterseite der Flugschiene (1) an jeder Öffnung ein Hohlzylinder angeordnet ist, der mit der Öffnung in der Flugschiene fluchtet und jeder Hohlzylinder (8a,8b) mindestens ein Innengewinde (9a,9b) aufweist, in das sowohl von der Oberseite durch die Öffnung in der Flugschiene als auch von der Unterseite ein Außengewinde einschraubbar ist.

## Beschreibung

Die Erfindung betrifft eine Flugschiene mit einer Oberseite und einer Unterseite zum Aufhängen von Gehäusen der Veranstaltungstechnik umfassend eine von der Oberseite zugängliche Aufnahme für ein verrastbares Anschlagmittel sowie mindestens zwei die Flugschiene durchsetzende Öffnungen.

Die Veranstaltungstechnik befasst sich mit der technischen Planung und Durchführung von Veranstaltungen, wie insbesondere Konzerten, Messen oder in Theatern. Insbesondere im Bereich der Ton- und Lichttechnik werden die Gehäuse von Lautsprechern oder Scheinwerfern an Traversen im Bereich der Bühne aufgehängt (geflogen). Zur Lautsprecheraufhängung wird eine sogenannte Flugschiene im Gehäuse des Lautsprechers eingelassen. In dieser Schiene lassen sich werkzeuglos spezielle Anschlagmittel verrasten. Als Anschlagmittel kommen insbesondere sogenannte Lautsprecher-Studs, auch als Flugösen bezeichnet, in Betracht. An den Flugösen werden mit Hilfe von Schäkeln Ketten oder Seile angeschlagen, die ein Aufhängen bzw. Ausrichten des Gehäuses erlauben.

Die DE 20 2011 001 728 U1 offenbart eine gattungsgemäße, als Platte ausgeführte Flugschiene mit einer von der Oberseite zugänglichen Aufnahme für ein verrastbares Anschlagmittel sowie insgesamt sechs um die Aufnahme herum angeordneten Öffnungen zum Verschrauben der Flugschiene an dem Gehäuse.

Die DE 20 2005 014 752 U1 offenbart eine in einen Tragegriff eines Lautsprechergehäuses integrierte Flugschiene, in deren Aufnahme als Schiffchen bezeichnete Anschlagmittel eingesetzt und verrastet werden. Die Anschlagmittel weisen ihrerseits bevorzugt Haken auf, an welche Seile oder Ketten eingehängt werden können, um das Lautsprechergehäuse aufzuhängen.

Die US 5 823 724 A offenbart eine Verzurrschiene zur Ladungssicherung an dem Boden eines Kraftfahrzeugs. Die Verzurrschiene weist eine Aufnahme für ein verrastbares Anschlagmittel sowie mehrere Öffnungen auf. Die Öffnungen durchsetzende Schrauben sichern die in eine Vertiefung in dem Fahrzeugboden eingelassene Verzurrschiene.

Die US 2008/0 101 883 A1 offenbart eine Befestigungsschiene, die an einer Ladefläche oder einer Bordwand eines Lastwagens befestigt ist. Die Befestigungsschiene weist mindestens einen sich entlang der Schiene erstreckenden Flansch auf, über den quer zu dessen Längserstreckung eine Halterung aufsetzbar ist. Die Halterung weist zu diesem Zweck einen C-förmigen Abschnitt auf, der den Flansch umgreift. Die Halterung weist außerdem eine in einer Gewindehülse geführte Klemmschraube auf, die die auf den Flansch aufgesetzte Halterung fixiert.

Die DE 203 18 832 U1 offenbart eine Zurrschiene zum Sichern von Ladegut auf einer Fläche eines Fahrzeugs. Die Zurrschiene ist an einer Platte der Ladefläche mittels Schrauben festgelegt, die jeweils eine Bohrung im Nuttiefsten der Zurrschiene durchsetzt. Jeder Schraube ist ein Dübelkörper zugeordnet, dessen Firstkanten die Unterfläche der Platte untergreifen, so dass durch Anziehen der Schraube eine Klemmwirkung erzeugt und die Zurrschiene an der Platte befestigt wird.

Das Aufhängen des Gehäuses mit Flugschienen setzt stets voraus, dass die arretierbaren Anschlagmittel, nämlich die Lautsprecher-Studs, zur Verfügung stehen. Fehlen diese, kann das Gehäuse bei der Veranstaltung nicht aufgehängt werden.

Ausgehend von diesem Stand der Technik liegt der Erfindung die Aufgabe zugrunde, eine Flugschiene der eingangs erwähnten Art zu schaffen, mit der ein Aufhängen des Gehäuses auch ohne spezielle Anschlagmittel für Flugschienen möglich ist.

Diese Aufgabe wird bei einer Flugschiene der gattungsgemäßen Art erfindungsgemäß dadurch gelöst, dass an der Unterseite der Flugschiene an jeder Öffnung ein Hohlzylinder angeordnet ist, der mit der Öffnung in der Flugschiene fluchtet und jeder Hohlzylinder mindestens ein Innengewinde aufweist, in das sowohl von der Oberseite durch die Öffnung in der Flugschiene als auch von der Unterseite ein Außengewinde einschraubbar ist. Jeder Hohlzylinder kann einstückig mit der Flugschiene ausgebildet oder an deren Unterseite anderweit befestigt sein, beispielsweise durch Verschweißen oder Verlöten.

In das Innengewinde jedes Hohlzylinders können von der Oberseite ein Gewindestift mit daran angeordnetem Anschlagmittel eingeschraubt werden. In Betracht kommen Standard-Ringschrauben, Augenschrauben sowie an dem Gewindestift angeordnete Anbauteile, an denen das Gehäuse aufgehängt oder befestigt werden kann.

Von der Unterseite wird in das Innengewinde jedes Hohlzylinders eine Schraube mit einem Kopf eingeschraubt, so dass die Flugschiene durch die Gehäusewand hindurch befestigt wird. Der möglichst großflächige Kopf dient als Anschlag an der Rückseite der Gehäusewand. Ein Ausreißen der Befestigungsmittel aus der Gehäusewand ist nahezu ausgeschlossen.

In vorteilhafter Ausgestaltung der Erfindung weist die Aufnahme der erfindungsgemäßen Flugschiene in Übereinstimmung mit den bekannten Flugschienen einen länglichen Durchbruch mit mehreren durch Stege miteinander verbundenen kreisförmigen Abschnitten auf. Die übereinstimmende Ausbildung der Aufnahme wie bei herkömmlichen Flugschienen erlaubt die unveränderte Weiterverwendung der speziellen Anschlagmittel, nämlich der Lautsprecher-Studs.

Damit die speziellen Anschlagmittel die Aufnahme der Flugschiene hintergreifen können, ist unterhalb der Aufnahme eine Ausnehmung angeordnet, die entweder in die Gehäusewand eingelassen oder als Bestandteil der Flugschiene ausgebildet ist. Die Flugschiene ist im letztgenannten Fall vorzugsweise als Kastenprofil ausgebildet, an dessen Oberseite der längliche Durchbruch als Aufnahme angeordnet ist. Das Kastenprofil ist vorzugsweise ganz oder teilweise in die Gehäusewand eingelassen.

In einer weiteren Ausgestaltung der Erfindung wird die Flugschiene lediglich mit zwei Schrauben befestigt. Jeweils eine Öffnung zum Befestigen der Flugschiene ist neben den Schmalseiten der Ausnehmung angeordnet, wobei der Abstand zwischen den beiden Öffnungen zwischen 110 - 120 mm, vorzugsweise 115 mm beträgt. Aufgrund der Befestigung der Flugschiene durch die Gehäusewand hindurch kann mit weniger Befestigungsschrauben eine gleichgroße Belastbarkeit der Flugschiene erreicht werden, wie bei herkömmlichen Flugschienen, die mit einer größeren Anzahl von Befestigungsschrauben von der Oberseite an der Gehäusewand befestigt sind.

Die erfindungsgemäße Flugschiene ist vorzugsweise plattenförmig ausgebildet, wobei die Ausnehmung unterhalb der Aufnahme in die Gehäusewand eingebracht ist. Die Ausnehmung kann beispielsweise als Einfräsung in die Gehäusewand ausgeführt sein. Vorzugsweise schließt die Flugschiene bündig mit der Oberfläche der Gehäusewand ab, um Störkanten bei der Lagerung und beim Transport des Gehäuses zu vermeiden.

Eine nochmals verbesserte Lastabtragung über die Befestigungsschrauben wird erreicht, wenn sich jeder Hohlzylinder der Flugschiene nicht nur durch einen Durchgang in der Gehäusewand, sondern darüber hinaus einen Durchgang einer hinter der Gehäusewand angeordneten Verstärkungslage erstreckt, die als Anlagefläche für den Kopf der von der Unterseite eingeschraubten Befestigungsschraube dient. Die Verstärkungslage kann beispielsweise als Materialdopplung an der Innenseite der Gehäusewand ausgeführt sein.

Nachfolgend wird die Erfindung anhand der Figuren näher erläutert. Es zeigen:
- **Figur 1**: Eine Aufsicht auf eine erfindungsgemäße Flugschiene,
- **Figur 2**: eine Seitenansicht einer Flugschiene nach Figur 1,
- **Figur 3**: eine Aufsicht auf eine Gehäusewand mit eingelassener Flugschiene nach Figur 1,
- **Figur 4**: einen Schnitt entlang der Linie AA nach Figur 3 sowie
- **Figur 5**: eine Schnittdarstellung entsprechend Figur 4 mit zwei Ringschrauben.

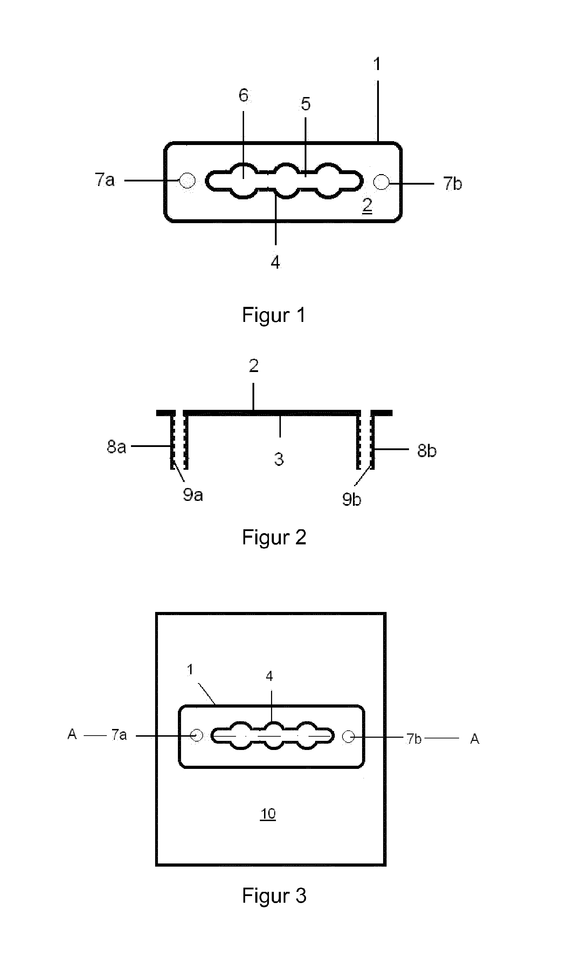

Figur 1 zeigt in Verbindung mit Figur 2 eine erfindungsgemäße Flugschiene (1) mit einer Oberseite (2) und einer Unterseite (3). Die Flugschiene (1) wird im Wesentlichen von einem rechteckförmigen Blech gebildet. Die Flugschiene (1) umfasst eine von der Oberseite (2) zugängliche Aufnahme (4) für ein verrastbares, in den Figuren nicht dargestelltes Anschlagmittel, insbesondere einen sogenannten Lautsprecher-Stud. Die Aufnahme (4) ist als länglicher Durchbruch mit mehreren durch Stege (5) miteinander verbundenen kreisförmigen Abschnitten (6) ausgeführt. Die Flugschiene weist neben den Schmalseiten der Aufnahme (4) zwei die Flugschiene durchsetzende Öffnungen (7a, b) auf.

Wie insbesondere aus Figur 2 erkennbar, ist an der Unterseite der Flugschiene (1) an jeder der beiden Öffnungen (7a, b) ein Hohlzylinder (8a, b) angeordnet, der mit der Öffnung (7a, b) in der Flugschiene (1) fluchtet und der ein durchgehendes Innengewinde (9a, b) aufweist, in das sowohl von der Oberseite (2) als auch von der Unterseite (3) ein Außengewinde einschraubbar ist.

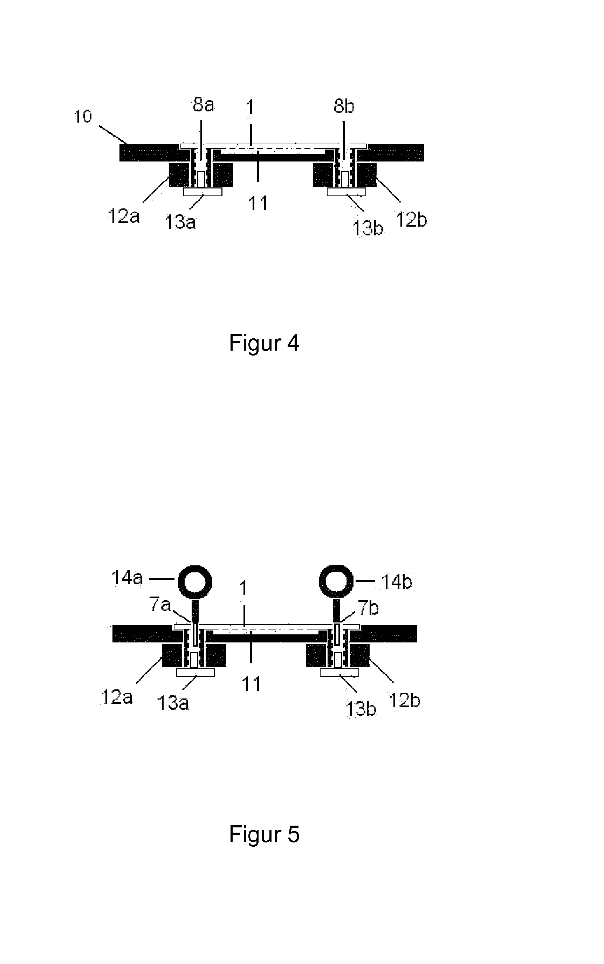

Figur 3 zeigt in Verbindung mit den Figuren 4 und 5 eine insbesondere aus Holz bestehende Gehäusewand (10) eines Lautsprechergehäuses, in das die Flugschiene (1) eingelassen ist. Wie insbesondere aus den Figuren 4 und 5 erkennbar, schließt die Oberseite der Flugschiene (1) bündig mit der Oberfläche der Gehäusewand (10) ab. Weiter ist aus den Figuren 4 und 5 erkennbar, dass unterhalb der Aufnahme (4) der Flugschiene (1) eine Ausnehmung (11) in die Gehäusewand (10) eingefräst ist. Die Ausnehmung (11) ermöglicht es, dass die Lautsprecher-Studs die Flugschiene teilweise hintergreifen und in der Ausnehmung (4) der Flugschiene (1) arretiert werden können. Die Hohlzylinder (8a, b) erstrecken sich jeweils durch einen Durchgang in der Gehäusewand (10) und darüber hinaus durch einen Durchgang einer hinter der Gehäusewand (10) angeordneten Verstärkungslage (12a, b) in Form einer Materialdopplung.

Eine in das Innengewinde (9a, b) jedes Hohlzylinders (8a, b) von der Unterseite (3) eingeschraubte herkömmliche M10-Schraube (13a, b) stützt sich mit ihrem Kopf an der Unterseite der Verstärkungslage (12a, b) ab. Hierdurch wird die Flugschiene durch Zugbeanspruchung auf der Oberfläche der Gehäusewand (10) befestigt. Durch diese Zugbeanspruchung lassen sich je Verbindung zwischen Flugschiene (1) und Gehäusewand (10) höhere Kräfte übertragen, als dies bei der herkömmlichen Verschraubung der Flugschiene von der Oberseite in eingepresste Muttern möglich ist.

Das Aufhängen des Gehäuses erfolgt entweder über die üblicherweise mit der Flugschiene zusammenwirkenden Lautsprecher-Studs, die in die Aufnahme (4) einrasten. Sofern diese Lautsprecher-Studs nicht verfügbar sind, kann in das Innengewinde (9a, b) der Hohlzylinder (8a, b) von der Oberseite (2) beispielsweise eine Ringschraube (14a, b), eingeschraubt werden. Die Krafteinleitung erfolgt dann ausschließlich über die Hohlzylinder (8a, b) und die am gegenüberliegenden Ende eingeschraubte M10-Schraube (13a, b). Die Schweißverbindungen zwischen den Hohlzylindern (8a, b) und der Unterseite (3) der Flugschiene (1) werden nicht belastet. Anstelle der Ringschrauben (14a, b) können je nach Anwendungsfall auch Gewindestifte mit abweichenden Anschlagmitteln eingeschraubt werden.

### Bezugszeichenliste

| Nr. | **Bezeichnung** |
|---|---|
| 1. | Flugschiene |
| 2. | Oberseite |
| 3. | Unterseite |
| 4. | Aufnahme |
| 5. | Stege |
| 6. | kreisförmige Abschnitte |
| 7a, b. | Öffnungen |
| 8a, b. | Hohlzylinder |
| 9a, b. | Innengewinde |
| 10. | Gehäusewand |
| 11. | Ausnehmung |
| 12a, b. | Verstärkungslage |
| 13a, b. | Schraube |
| 14a, b. | Ringschraube |

## Patentansprüche

1. Flugschiene (1) mit einer Oberseite (2) und einer Unterseite (3) zum Aufhängen von Gehäusen der Veranstaltungstechnik umfassend eine von der Oberseite (2) zugängliche Aufnahme (4) für ein verrastbares Anschlagmittel sowie mindestens zwei die Flugschiene (1) durchsetzende Öffnungen (7a, b), **dadurch gekennzeichnet, dass** an der Unterseite (3) der Flugschiene (1) an jeder Öffnung (7a, b) ein Hohlzylinder (8a, b) angeordnet ist, der mit der Öffnung (7a, b) in der Flugschiene (1) fluchtet und jeder Hohlzylinder (8a, b) mindestens ein Innengewinde (9a, b) aufweist, in das sowohl von der Oberseite (2) durch die Öffnung (7a, b) in der Flugschiene (1) als auch von der Unterseite (3) ein Außengewinde einschraubbar ist.

2. Flugschiene nach Anspruch 1, **dadurch gekennzeichnet, dass** in das Innengewinde (9a, b) jedes Hohlzylinders (8a, b) von der Oberseite (2) ein Gewindestift mit einem an dem Gewindestift angeordneten Anschlagmittel eingeschraubt ist.

3. Flugschiene nach Anspruch 1 oder 2, **dadurch gekennzeichnet, dass** in das Innengewinde (9a, b) jedes Hohlzylinders (8a, b) von der Unterseite (3) eine Schraube (13a, b) mit einem Kopf eingeschraubt ist.

4. Flugschiene nach einem der Ansprüche 1 bis **3,dadurch gekennzeichnet, dass** die Aufnahme (4) einen länglichen Durchbruch mit mehreren durch Stege (5) miteinander verbundenen kreisförmigen Abschnitten (6) aufweist.

5. Flugschiene nach einem der Ansprüche 1 bis 4, **dadurch gekennzeichnet, dass** unterhalb der Aufnahme (4) eine Ausnehmung (11) angeordnet ist.

6. Flugschiene nach Anspruch 4 oder 5, **dadurch gekennzeichnet, dass** jeweils eine Öffnung (7a, b) zum Befestigen der Flugschiene (1) neben den Schmalseiten der Aufnahme (4) angeordnet ist und der Abstand zwischen den beiden Öffnungen (7a, b) zwischen 110 mm - 120 mm beträgt.

7. Gehäuse für die Veranstaltungstechnik mit mehreren Gehäusewänden (10) und mindestens einer an mindestens einer der Gehäusewände (10) angeordneten Flugschiene (1) nach einem oder mehreren der Ansprüche 1 bis 6.

8. Gehäuse nach Anspruch 5 und 7, **dadurch gekennzeichnet, dass** die Ausnehmung (11) unterhalb der Aufnahme (4) in die Gehäusewand (10) eingebracht ist.

9. Gehäuse nach Anspruch 7 oder 8, **dadurch gekennzeichnet, dass** die Flugschiene (1) in die Gehäusewand (10) eingelassen ist.

10. Gehäuse nach einem der Ansprüche 7 bis 9, **dadurch gekennzeichnet, dass** sich jeder Hohlzylinder (8a, b) der Flugschiene (1) durch einen Durchgang in der Gehäusewand (10) und einen Durchgang einer hinter der Gehäusewand (10) angeordneten Verstärkungslage (12a, b) erstreckt, die als Anlagefläche für den Kopf der von der Unterseite eingeschraubten Schraube (13a, b) dient.
